## Europäisches Patentamt

## European Patent Office

## Office européen des brevets

(19)

(11) Veröffentlichungsnummer: **0 244 390**
**A2**

(12)

# EUROPÄISCHE PATENTANMELDUNG

(21) Anmeldenummer: **87890018.2**

(22) Anmeldetag: **29.01.87**

(51) Int. Cl.³: **F 16 K 3/02**
**F 16 K 39/04, F 16 K 3/314**

(30) Priorität: **03.02.86 YU 145/86**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **Jankovic, Mladen**
**Chrüzmattliring 10**
**CH-6403 Küssnacht(CH)**

(72) Erfinder: **Jankovic, Mladen**
**Chrüzmattliring 10**
**CH-6403 Küssnacht(CH)**

(74) Vertreter: **Hamburger, Walter A., Dipl.-Ing.**
**Patentanwaltskanzlei HAMBURGER Postfach 96**
**Mahlerstrasse 9**
**A-1015 Wien(AT)**

(54) **Schieberventil mit integriertem Arbeitsmittelsystem.**

(57) Schieberventil mit integriertem Arbeitsmedium, stellt eine neue Lösung zur Anwendung der Potentialenergie des Arbeitsmediums zur grösseren Antreibssicherheit des Schieberventil und leichterem Aktivieren, dar.

Die konstruktive Lösung dieses Problems besteht aus zwei Komponenten:

dem Verteiler, der die Funktion der Druckausgleichung des Arbeitsmediums in dem Ventilgehäusemittelteil mit dem Druck in der Zuleitung, wie auch die Mediumüberströmung aus dem Ventilgehäusemittelteil in die Rohrleitung, übernimmt, wenn der Druck die zugelassene Grenze überschreitet, oder beim Schieberventilvoröffnen, wenn es notwendig ist die Mediumskraft gegen den Sperrkörper in richtung seines Oeffnes zu richten, und danach die Antriebselemente zu aktivieren.

Der Verteiler kann hydraulisch, elektronisch, elektrisch, mechanisch oder handgesteuert werde.

Der Ventilinnenkörperteil mit Mechanismus zum blokieren und automatisches einstellen des Winkels, dient für die Aufnahme der kynetischen Energie des Arbeitsmediums in der Schieberventilschliessphase. Damit erlangt man auch die Neutralisation der Folgen von hydraulischen Schlägen in der Rohrleitung, während das Schieberventil geschlossen ist.

Mit der Erfindung, ist die Herstellung von kleinsten bis zu grössten Nennweiten des Schieberventils, vorgesehen, mit der beiderseitigen anschlussmöglichkeit, für alle Fluide ohne Paraffinanteilen.

*Abb.2*

EP 0 244 390 A2

## TECHNISCHES PROBLEM

Das technische Problem, welches durch diese Erfindung gelöst wird, umfaßt die Ausnützung des Energiepotentials des Arbeitsmediums für grössere Antriebssicherheit und leichteres aktivieren des Schiebers, bzw. Gewinnung von Schiebern hoher Beschaffenheit, mit Ausführungen für alle genannten Oeffnungen, insbesondere für grosse, mit hohem Arbeitsdruck.

Dieses komplexe technische Problem stellt folgende Forderungen:

1. Sichere Undurchlässigkeit des Schiebers in geschlossener Position und die Fähigkeit hydraulische Schläge in der Rohrleitung, aufnehmen zu können.

2. Zum Schieberöffnen die Potentialenergie und die kynetische Energie des Arbeitsmediums verwenden.

- 2 -

3. In der Schliessphase des Schiebers die kynetische Energie
   des Arbeitsmediums proportional anwenden.

4. Beim Oeffnen und Schliesen des Schiebers der Dichtungoberfläche des Sperrkörpers und des Scheibensitzes, dürfen die
   selben nicht aneinander gedrückt werden, um die Abnützung
   zu umgehen.

5. Der Winkel des Sperrkörpersmuss, an Hand dieser Forderungen,
   vergrössert und optimal gestellt werden, so wie auch das
   Steckenbleiben des Sperrkörpers, wegen erhöhter Temperatur
   des Arbeitsmediums oder augenblicklichem Schliesen des
   Schieberventils, umgangen werden muss.

6. Die Konstruktion des Schieberventils muss adekvat dem
   Arbeitsmedium und der Grösse der Nennweite entsprechen,
   mit freiem oder wechselhafter Durchflussrichtung.

DER TECHNISCHE STAND
--------------------

Bekannterweise existiert fast die ganze Schieberventilantriebssicherheitsproblematik und die Frage der breiteren
Anwendung in den Sperrarmaturen, wegen der Unanwendbarkeit
der Arbeitsmediumenergie.
Nur der Autor dieser Erfindung wusste die enorme Energie, in
seiner Erfindung P-654/84, zu nutzen, während andere bekannte
Lösungen des Problems nur teilweise oder einseitig das Problem
beleuchten.

Das englische Patent 613 266 und 423 693 und das französische
Patent 1 070 382 zeigen Schieberventile, welche durch wechselhaftige Ventile, zwischen Zufluss und dem Mittelteil des
Ventils, verbunden sind, so das der Arbeitsmediumdruck in
diesem Teil des Gehauses mit dem Zuflusdruck gleichgestellt
ist.

Auf diese Weise ist zwar eine gute Schieberventildichtung
gewährleistet, wen sich das Schieberventil in geschlossener
Position befindet, das Oeffnen des Schieberventils bleibt aber
weiter ein grosses Problem.

Ein weiterer Fortschritt zur Lösung des Problems, wurde mit
dem englischen Patent 968 132 gemacht, welches eine weitere
Leitung mit einem kleinerem Sperrorgan/By-Pass/einführte.

So konnte man eine Voröffnung des Schieberventils durchführen
um das Schieberventil teilweise abzulasten, damit es leichter
geöffnet werden kann, der Arbeitsmediumsdruck im Mittelteil
des Schieberventils blieb auf dem Zuflusdrucksnivau.

Vor diesem Patent bestand das amerikanische Patent No.
1 648 986, welches das Einbauen von zwei Sperrventilen in
das Schieberventil vorsieht.
Diese Sperrventile schliesen und öffnen sich welchelseitig,
so dass vor dem Oeffnen des Schieberventils, das Sperrventil
geschlossen wird, und zwar auf der Verbindung Zuflus-Mittelteil
des Schieberventils, und das Sperrventil auf der Linie Abfluss-
Mittelteil des Schieberventils geöffnet wird.
Auf diese Weise kommt es zur Erleichterung des Schieberventils
worauf das Oeffnen des Schieberventils folgt.

Auf Hand dieses Patents wird die Vergeringerung des Arbeitsmediumsdrucks im Mittelteil des Schieberventils, welcher niedriger
als in der Zuflus ist, ermöglicht, wo durch das Oeffnen des
Schieberventils bedeutend erleichtert wird.
Dieser Vorgang ist aber sehr kompliziert und kontroliert
nicht den Unterschied des Arbeitsmediumsdrucks, was zum Platzen
des Schieberventilsgehäuses führen kann.
Da aber die Sperrarmatur sehr standfähig sein muss, ist die
Anwendung dieser Lösung ausgeschlossen.

Neben diesen Patenten erwähne ich noch das deutsche Patent
No. 634 641 und das französische No. 2 053 800.
In diesen Patenten ist der Sperrkörper mit einem Mechanismus
versehen, in form einer Schmiedezange, über welcher die Scheiben
mit der Spindel verbunden sind.
Ueber den Hebel des Mechanismus sollen die Scheiben gehoben
werden, so dass sie einen kleinerenWinkel einschliesen, worauf
das Oeffnen des Schieberventils vorgenommen wird.
Auf diese Weise wird die Reibung zwischen den Dichtungen
fergeringert, wie auch das Steckenbleiben des Sperrkörpers
zwischen den Sperringen im Schieberventilgehause, verhindert.

Diese Lösung des Problems, bei welcher derSperrkörper mit einem Mechanismus zur Verbindung der Scheiben und der Spindel, versehen ist, zeigt uns eine Richtung in der Entwicklung des Schieberventils, welche sofort verlassen werden muss, da sie zu nichts führt.

Der grundliegende Fehler liegt darin, das der Winkel des Sperrkörpers noch vor dem Oeffnen vergeringert wird, in der Schliessphase jedoch vergrössert wird, wo durch beide Vorgänge erschwert werden.
Korrekt wäre es, den Winkel beim Oeffnen zu behalten, ihn aber beim Schliessen zu verkleinern, welches einen geringeren Moment des Hantierens mit dem Schieberventil zum Nachteil haben würde.

Der andere Nachteil wäre der, daß die Scheiben des Sperrkörpers keine Auslastungsventile haben, so daß sie gegebenenfals nicht vom Scheibensitz getrennt werden können, wenn es sich um grössere Dimensionen handelt.

Alle diese Beispiele der Ausfüfrung der Schieberventile, welche den technischen Stand angeben, führen zu keinen bedeutenderen Resultaten, vor allem zu keinen einheitlichen und kompletten Problemüberwindungen beim Bau eines Schieberventils, ausser der Problemlösung des Autors und seinem Patent unter der No. P-654/84.

DIE ERLAEUTERUNG DES TECHNISCHEN PROBLEMS

------------------------------------------------

Durch das Symbol AMS-Schieber/ventil/, ist ein Schieberventil mit integriertem Arbeitsmediumssystem gekennzeichnet,
und stellt eine Systemlösung für die Anwendung der Arbeitsmediumsenergiepotentials dar, welche eine technologische
Formel des Schieberventils mit anhaltender Qualität ist.
Ueber 100 Jahre technologischer Entwicklung des Schieberventils sind vergangen, bis man zu dieser Lösung, mit welcher
man die Arbeitsmediumsenergie beherrschen konnte, kam.
Diese lange Zeitperiode, wie auch ein breites Spektrum
technischer Mangel, der bereits bestehenden Schieberventile,
betont ausgiebig die Komplexheit des technischen Problems,
welches durch diese Erfindung gelöst werden soll.

Die Grundstörung in der technologischen Entwicklung des
Schieberventils war ein relativ kleiner Winkel des Sperrkörpers, der unter Einfluss der Arbeitsmediumskraft, welche auf
ihn in ungewünschten Richtungen Beanspruchungen haben könnten,
nicht vergrössert werden dürfte.
Dies wurde eine noch grössere Antriebsveunsicherung hervorrufen.
Mein Patent weiss diese Kraft zu beherrschen, so dass sie zu
Servo-Funktionalitöt dient, und zum Oeffnen und Schliesen des
Schieberventils ein bedeutend geringerer Hantierungsmoment
nötig ist, da beim Oeffnen eine Servo-Komponente entsteht, welche
ihre Energie in Arbeit umwandelt, während beim Schliessen, die
Kraftrichtung, welche dann den Sreppkörper zum Mittelteil bewegt,
geändert wird.
An Hand dieser Arbeit wird das Schieberventil geschlossen.
Auf diese Weise wird das Schieberventil durch die Arbeitsmediumsenergie aktiviert, so dass die Arbeitsvorrichtungen
erheblich weniger Kraft benötigen.
Das Bewegen des Schieberventils in Richtung AUF-ZU ist jetzt
erleichtert, die Fluidkraft, jedoch, kann enorm gross sein, so
daß das Bewegen unbedingt in den Oeffnungen, welche diese Kraft
aufnehmen, geführt werden muss.

Die Spindel bleibt von diesen Belastungen geschohnt, sogar von
hydraulischen Schlägen in der Rohrleitung.
Das System sieht einen vergrösserten Sperrkörperwinkel voraus,
was aber keine negativen Folgen, sondern positive hat, und zwar
im Sinne der vergeringerten Abnützung der Sperrelemente und das
leieten der Fluidkraft in Richtung des Sperrkörpers.
Die Erfindung sieht die Schieberventile in allen Dimensionen
mit beliebiger oder wechselnder Durchflussrichtung voraus,
während der Oeffnungskoefitient des Durchflusses unverändert
bleibt, wie auch die Art des Arbeitsfluides.
Für Fluide mit Paraffinanteilen ist eine andere Variante mit
entsprechender Lösung vorausgesehen.

Wenn man bedenkt dass das Sicherheitsventil/Ueberlaufventil/
und einen Mechanismus zum Anschmieren der Ringe der Sperrdichtung
haben kann, so werden praktisch alile Mangel des Schieberventils
abgeschafft.
Es bleiben einzig die Rücklagen und die Gabaritmasse am Grund
des Schieberventils, wo verbliebene feste Materien ein Nest
bilden, welches aber durch dieses System ausgewaschen werden kann.

Schieberventil mit AMS, wird die Sperraramturenstruktur bereichern
und verändern, da seine Merkmale bedeutend verbessert wurden,
die Antriebssicherheit, wie auch die Erhöhung des Arbeitsdruckes
und Nennöffnungen belangend.
Die Kosten werden nicht erhöht werden, da sie für ihre
Ausführung mit billigerem Antriebseinrichtungen und dem
Auslassen der Hilfsrohrleitung zum vergeringern des Druckunterschiedes, gedeckt werden.

0244390

Das AMS Schieberventil besteht, vorallem, aus zwei Komponenten:
-Verteiler für das Schieberventil

-Sperrkörper mit Mechanismus zum blokieren und zum automatischen
einstimmen des Winkels

Der Verteiler des Schieberventils ist Vorichtung jedes Schieberventils, unabhängig von der Grösse seiner Nennöffnung, während
den Mechanismus zum blokieren und automatischen einstellen des
Sperrkörperwinkels, nur Schieberventile mit grösserer Nennöffnung haben.

Die weitere Erlaeuterung der Erfindung wird an Hand der
Zeichnungen erklärt werden:

Zeichn.Nr. 1 zeigt das Schieberventil mit herausragender
Spindel, welche mit Hilfe eines Handrades aktiviert wird.

Zeichn.Nr. 2 zeigt das Schieberventil mit nichtherausragender
Spindel, welche mit einem Elektromotor aktiviert und angetrieben
wird.

Zeichn.Nr. 3 zeigt den Verteiler für das Schieberventil/Membrantypus/, mit einem mechanisch aktivierendem Pilotventil.

Zeichn. Nr. 4 zeigt die bekannte Konstruktion des Sperrkörpers,
welcher mit der herausragenden Spindel, über die modifizierte
Muter, gekoppelt ist.

Zeichn.Nr. 5 zeigt den Schieberventilverteiler mit elektroaktivierendem Pilotventil und integriertem Ueberlaufventil.

Zeichn.Nr. 6 zeigt den Verteiler für das Schieberventil
mit elektronischer Betriebsführung.

0244390

Zeichn.Nr. 7 zeigt den Sperrkörper in Kopplung mit der herausragenden Spindel, welche einen Mechanismus zum blokieren und
einstellen des Winkels hat.

Zeichn.Nr. 7 a zeigt den Sperrkörper in Kopplung mit der nichtherausragenden Spindel, welche einen Mechanismus zum blokieren
und einstelen des Winkels hat.

An Hand Zeichnung Nr. 1 und 2, besteht das Schieberventil mit
integriertem Arbeitsmedium aus einem Verteiler für das Schieberventil R3, R5 und einem Sperrkörper mit Mechanismus zum
blokieren und automatischem einstellen des Winkels Zeichn.Nr.7
und 7a, als Komponente dieses Systems, über welche sich die
Arbeitsmediumsenergie in Arbeit umwandelt, mit welcher die
Funktionalität des Schieberventils verbessert wird.

Der Schieberventilverteiler R3 und R5 stellt eine unternnbare
Vorrichtung des Schieberventils dar, von der kleinsten bis zur
grössten Nennöffnung des Schieberventils, und wird anstatt der
Hilfsrohrleitung/By-Pass/ eingebaut, oder des wechselhaftigen
Ventils, wie auf Zeichnung Nr. 1 und 2, wo man Drei Verteileranschlüsse Z,M und A, welche den Verteiler für das Schieberventil mit
der Zufluss Z verbinden, wie mit dem Schieberventilmittelteil M
und dem Abflussrohr A, gezeigt wird.
Das Zufluss und Abflussrohr des Schieberventils, können ihre
Rollen, ohne Einfluss auf die Funktion des Verteilers, auswechseln.
Die Verteilerfunktionalität des Schieberventils ist mehrfach,
und kann nicht mit der Hilfsrohrleitung oder dem wechselhaften
Ventil, welche nur teilhafte Lösungen darstellen, verglichen werden.
Über den Verteiler wird der Arbeitsfluiddruck im Mittelteil
des Schieberventils mit dem Zuflussrohrdruck, ausgeglichen, was
die Voraussetzung zum einwandfreien Schliessen des Schieberventils
und zur Absicherung von hydraulischen Schlägen, ist.
Der Verteiler lastet den Schieberventilmittelteil vor dem
Oeffnen des Schieberventils, ab, und letzten Endes, wird mit dem
Verteiler das Ueberflussventill "S" und die Schmiervorrichtung
der Spindeldichtung "U", integriert.

In Zeichnung Nr. 1 ist das Verbinden des Verteilers R3 mit
dem Zuflussrohr Z, dem Mittelrohr M und dem Abflussrohr A, wie auch
mit den Hilfsrohrleitungen d und O mit dem Pilotventil/Hilfsventil/ 9, dargestellt.
Es wird auch die Verbindung der Schmiervorrichtung mit der
Spindel "U" gezeigt.

Beim Bewegen des Handrades 5 in Richtung des Schieberventilsöffnen, wird zuerst eine radiale Versetzung der Spindel 4 um
90° vorgenommen, so daß das Excenter 6 über den Hebel 7 das
Pilotventil 9 in Trieb setzt.
Ueber das Pilotventil 9 wird die Verbindung zwischen den Hilfsrohrleitungen d und O gewährleistet.
In diesem Moment wird der Verteiler R3, über welchen das Schieberventilmittelrohr in das Abflussrohr, abgelastet wird.
Der Entlastungsgrad, der über diesen Verteiler erreicht wird,
ist durch die Dimensionen der Drosselausführung 47 und 48
bestimmt.
Die Drosseln werden mit der Grösse der Nennöffnung und des
Nominaldruckes abgestimmt.
Der Arbeitsdruck kann kleiner als der Nominaldruck sein, so daß
auch der Entlastungsgrad kleiner ist. Die Entlastungsoperation
des Schieberventilsmittelrohrs dauert so lange, bis sich die Spindel 4 axial um die Länge des Excenters 6 verschiebt.
In diesem Moment schliest der Hebel 7 über die Feder 8 das
Hilfsventil.
Das heist, dass die Dauer des Entlastungsprozesses durch die
Länge des Excenters 6 bestimmt ist.
Die Dauer des Entlastungsprozesses sollte mit dem Uebergang
der Arbeitsmediumpotentialenergie in kynetische, welche dank
ihrer Kraft den Sperrkörper völlig schliest, beendet sein.

Die Hilfsrohrleitung O befindet sich unter Arbeitsmediumdruck
nur während das Pilotventil 9 geöffnet ist, so dieser Umstand
die Integration der Schmiervorrichtung derSpindel U in das AMS-
Schieberventil, zulässt.

0244390

Diese Vorrichtung besteht aus einen zweistufigen Zylinder, in welchem sich ein Kolben mit kleinerem oder größerem Durchmesser befindet.

Der Zylinder mit dem grösserem Durchmesser ist mit der Hilfsrohrleitung O verbunden, während der kleinere Zylinder mit Schmieröl gefüllt ist.

Im zweistufigen Zylinder befindet sich ein beweglicher Kolben, mit grösserer oder kleinerer Stirnfläche, auf dessen grössere Fläche die Arbeitsfluidkraft aus der Hilfsrohrleitung O, wirkt. Die Wirkung des Arbeitsfluides wird auf die kleinere Fläche des Kolbens auf das Schmieröl übertragen, welches festgedrückt, und teilweise in die Spindeldichtung 10 eingespritzt wird. Das Schmieröl gelangt in die Spindeldichtung 10 dank ihrer Aufteilung durch einen Metallring, auf welchem sich radial Löcher befinden.

Das Einspritzen des Schmieröls geht während sich der Hebel 7 unter Wirkung des Excenters 6 befindet, vor sich.
Dieses geschiet bei jedem öffnen des Schieberventils.

Nach Zeichnung Nr. 3 besteht derSchieberventilverteiler/Membran typus/, aus einem Körper 41, in welchem sich identische Teile aus der Patentanmeldung P-654/84, befinden, aber mit neuem Hilfsventil 9/ auf Zeichnung Nr. 1 gezeigt/, welcher über das Exenter 6, die radiale Versetzung der Spindel 4 um 90° und einer neuem Lösung zum anschmieren der Dichtung 10 über die Vorrichtung "U" aktiviert wird.

Nach Zeichnung Nr. 4 ist eine modifizierte Kopplung der herausragenden Spindel 4 mit einem Sperrkörper klassischer Konstruktion, gezeigt.
Man sieht, nach der Erfindung, eine neu-konstruierte Muter 35 und einen Stift 36, welche das radiale versetzen der Spindel 4, um 90° ermöglichen.
Dieses radiale versetzen der Spindel, dient zum einschliesen des Hilfsventils 9/Zeichn. Nr. 1/, über das Excenter 6, welches jedem öffnen des Schieberventils vorausgeht.

Nach Zeichnung Nr. 5 besteht der Schieberventilverteiler aus
einem Körper 60, in welchen Drosseln 67 und 68 eingebaut sind.
Ueber ihnen befinden sich die Ventilsitze 66 und 66a, auf welchen
die Kolben 63 und 64, die beweglich in ihren Zylinderkammern, sind,
aufliegen.
Die beweglichkeit in den Zylinderkammern, resuliert unter der
Wirkung der Federn 73 und 74 und dem Arbeitsfluiddruckunterschied.
Der Körper 60 ist mit einem Deckel 70, auf welchem sich eine
Oeffnung 51 mit einem Hilfselektroventil P und eine Oeffnung 52
mit einem Ueberlaufventil S geschlossen befindet, geschlossen.

Die Aufgabe des Schieberventilverteilers, als komponente zur
Anwendung der Arbeitsmediumsenergie, ist sehr komplex, kann aber
in zwei Phasen, welche sich auf folgendes beziehen, eingeteilt
werden:

- geschlossene Position
- das voröffnen des Schieberventils

In geschlossener Position des Schieberventils wird der Arbeitsmediumdruck im Mittelrohr des Schieberventils mit dem Niveau
des Druckes im Zuflussrohr gleichgesetzt, und zwar so dass der
Arbeitsmediumsdruck auf die Stirn Kolbens 63 oder 64 wirkt, da er
nicht durch die Rückschlagventile 75 und 75a dringen kann.
Daher übersteht er die Federkraft 73 oder 74, so dass der Kolben
63 oder 64 sich vom Sitz löst, und es entsteht eine Verbindung
zwischen dem Rohr Z oder A mit dem Mittelrohr M des Schieberventils,
so dass es zum zufluss des Fluids in das Mittelrohr M des Schieberventils kommt, bis der Druck des Fluids mit dem Druck im Zuflussrohr Z
ausgeglichen ist, wo nach sich der Kolben 63 oder 64 in seinen Sitz
senkt.

Dankt dieser Funktion des Verteilers erzielt man sicheres dichten
des Schieberventils und die Entlastung der Schieberventilspindel
von kleineren hydraulischen Schlägen, und ermöglicht die vergrösserung des Sperrkörperwinkels.

Die Aenderung der durchflussrichtung des Arbeitsmediums,durch
das Schieberventil,hat keinen Einfluss auf die Funktion des
Verteilers, noch auf die Sperrsicherheit des Schieberventils.
Denn der Sperrkörper sperrt mit beiden Platten, so dass das
Fluid im Mittelrohr des Schieberventils,hermetisch vom
Arbeitsfluid in der Rohrleitung,abgetrennt ist.
Dieser Umstand fordert den Einbau eines Ueberflussventils,wenn
das Arbeitsfluid den Kondensation neigt.
Der Einbau ist wegen der Möglichkeit, dass es nicht zu unerlaubten
Druckhöhen im Mittelrohr des Schieberventils kommt und wegen
eventueler Temperaturerhöhung im Gehäuse  des Schieberventils,
erforderlich.
Diese Funktion des Verteilers, übernimmt das Ueberflussventil S,
welches aus einem Sitz 52, Kolben 53 und einer Feder 61 besteht.
Die Feder 61 kann mit einer Gewindebuchse 62, welche in den
Deckel 70 gedreht werden kann,festgeschraubt werden.
Die Feder 61 wird mit der Kappe 65 gesichert.
Wenn der Fluiddruck im MittelrohrMdes Schieberventils bis zur
höchsten Grenze anwächst,wirkt er mit erhöhter Kraft auf die
Stirn des Kolbens 53,durch die Oeffnung im Sitz 52 und überwindet die Kraft der Feder 61, so dass der Kolben 53 sich vom
Sitz 52 hebt, was das Aktivieren der Kolben 63 und 64 zur
Folge hat. Dieses daher da das Fluid aus der Kammer,wo sich
die Federn 73 und 74 im Kanal O1 und O2 befinden,ausfliesst.
Danach dringt es durch ein Rückschlagventil 75 oder 75 a in
das Abflussrohr A oder Z ,so lange bis sich der Fluiddruck
auf die erlaubte Grenze senkt.
Der Ueberfluss des Fluids geschieht in kleineren Mengen durch
ein Rückschlagventil,im grösseren durch einen der Ventilsitze
66 oder 66a.

In der Voröffnungsphase des Schieberventils aktiviert sich das
Pilotventil P,um das Mittelrohr des Schieberventils zu entlasten. Erst danach schliesst sich der Elektromotor ein,mit
welchem die Spindel des Schieberventils aktiviert wird.
Die Spindel öffnet den Sperrkörper.
Durch das aktivieren des Pilotventils P wird eine Verbindung
zwischen den Kammern, wo sich die Federn 73 und 74 befinden über
die Oeffnung 51 mit dem Kanal $O_1 - O_2$ aufgestellt.
Jetzt kann das Fluid aus diesen Kammern,durch eines der Rückschlagventile 75 oder 75a abfliessen und zwar in das Abflussrohr A oder Z,
wenigstens doppelt so schnell als es durch die Bohrungen 50 einfliessen kann.
Daher kommt es zum Fall des Druckes in den Kammern überhalb der
Kolben 63 und 64,so dass sie sich vom Sitz 66 und 66a heben,
wegen der Kraftwirkung des Fluids im MittelrohrMdes Schieberventils im Zuflussrohr.
Auf diese Art und Weise,ist der Durchfluss des Arbeitsfluids aus
dem Zuflussrohr und Mittelrohr des Schieberventils,über den
Verteieler  in das Abflussrohr der Rohrleitung gewährleistet.
Dieses geschieht jedoch in aproportionalem Verhältniss.
Dieses Verfahren läuft durch die Drosseln 67 und 68 ab,welche
den Zufluss des Fluids aus der Richtung des Zuflussrohres zum
Mittelrohr des Schieberventils dämpfen,während in umgekehrter
Richtung sich die Drosseln 67 und 68 vom Sitz 66 und 66a lösen,
und das abfliessen des Fluids aus dem Kanal M mit ganzer Nennöffnung des Verteilers,ermöglicht wird.
Wegen diesem Verfahren ist das obengenannte Verhältniss
unproportional,denn der Zufluss ins Mittelrohr des Schieberventils ist geringer, als der Abfluss aus ihm ins Abflussrohr,
aus eben erklärten Gründen.

Mit diesem Verfahren erlangt man kontrollierte und völlige
Entlastung des Mittelrohrs,und erst dann werden die Antriebsvorrichtungen aktiviert,so dass das öffnen des Schieberventils
mit geringem Hantierungsmoment erledigt wird.

- 15 -

Die einzelnen Schritte dieser Operation werden mehanisch
oder mit elektronischen Lenker durchgeführt,so dass die
Arbeit am Schieberventil mit geringem Wissen,durchgeführt
werden kann.

In den Verteiler des Schieberventils ist ein Anschluss 71 zum
anschliessen der Vorrichtung zum Schmieren der Dichtung 10/
Zeichn.Nr.1/ eingebaut.
Die Vorrichtung wird nur in der Voröffnungsphase des
Schieberventils,durch das anschliessen des Hilfsventils P,
aktiviert.

Nach Zeichnung Nr.6 besteht der Verteiler mit elektronischem
Lenksystem,nach der Erfindung,aus dem Verteilerkörper 90,
in welchen die Sitze 86 und 86a eingebaut sind.
Auf die Sitze liegen die Kolben 83 und 84 auf. In den Kolben
sind Bohrungen 50 .
Die Kolben 83 und 84 sind mit Federn 89 und 89a belastet,
welche sich an den Deckel des Verteilers 91,anlehnen,in welchem
sich die Kanale 82 und 82 a,welche das Hilfselektroventil P1 und
P2 schliesen befinden.
Der Körper 90 hat drei Rohre Z,M,A,welche durch Schweissung mit dem
Zuflussrohr,Mittelrohr und Abflussrohr,verbunden werden.
Jedes Rohr hat je einen Anschluss Z1,M1,A1 für den Kontaktmonometer.
In Körper befinden sich noch zwei Drosselkolben 85 und 85 a,welche
durch die Federn 88 und 88a belastet sind.
Sie können Bohrungen haben oder nicht, falls sie als Rückschlagventile funktionieren.

Für das korrekte funktionieren des Verteilers sind die
Querschnitte der Bohrungen in den Kolben und Deckel des Verteilers,
sehr wichtig.

Die Bohrungen in den Kolben 85 und 85a dürfen nicht grösser als die Bohrungen 50 sein, und die Kanäle 81,82 und 81a,82a im Deckel 91,wenigstens einen doppelt so grossen Querschnitt als die Bohrungen 50 haben.
Das Verhältnis der Kolben 83 und 84 mit Querschnitt des Sitzes 86,86a muss abgestimmt sein,wie auf die Stärke der Federn 89,89a, während die Kolben nicht in Sperrkopplung mit ihren Zylinderräumen sein müssen.

Das funktionieren des Verteilers geschieht auf zwei Weisen: mechanisch und elektronisch

Unter mechanisch versteht man das gleichsetzen des Arbeitsmediumdruckes im Mittelrohr des Schieberventils mit dem Druck im Zuflussrohr,durch die Wirkung des Arbeitsmediums auf die Stirn des Kolbens 83 oder 84 durch seinen Sitz.
Wegen der Wirkung dieser Kraft ,wird die Feder 89 oder 89a,die den Kolben belastet,zusammengedrückt,so dass der Kolben sich vom Sitz löst,denn die Kolben 85 und 85a regulieren den Durchfluss der Fluide.
So kann das Arbeitsmedium aus dem Kanal Z oder A durch den Kanal M ins Mittelrohr des Schieberventils fliessen,und hilft damit dem Sperrkörper auf den Sitz des Schieberventils aufzuliegen.
Mit dieser mechanischen Funktion des Verteilers,welche automatisch abläuft,abhängig von dem Druckunterschied des Arbeitsmediums, erlangt man sichere Dichtigkeit des Schieberventils in geschlossener Position.

Die anderen Funktionen des Verteilers laufen über elektronisches lenken ab.Dieses kann programmiertwerden,abhängig von dem Druckunterschied in den drei Messanschlüssen Z1,M1 und A1,welche mit den Kontaktmonometern verbunden sind.
Diese Manometer messen den Arbeitsmediumsdruck und verwandeln diese Werte in Elektroimpulse,welche die Elektronik empfängt, und sie nach dem zusammengestellten Progamm,verarbeitet.

So kann der höchst erlaubte Druckwert im Mittelrohr des Schieberventils programmiert werden.

Wenn der Höchstwert erlangt ist,muss eines der Hilfselektroventile P1 oder P2 geöffnet werden,so das es zum überfliessen des Arbeitsmediums in das Abfluss oder Zuflussrohr kommt.

So wird der Druck kontroliert,der Arbeitsmediumsdruck im Mittel rohr des Schieberventils,wenn das Schieberventil geschlossen ist,dass selbe wird in der Voröffnungsphase erlangt,um das Schieberventil leichter zu öffen.

In dieser Phase muss ein Teil des Fluids aus dem Mittelrohr in das Abflussrohr abgelassen werden,so das die Arbeitsmediumkraft aus dem Zuflussrohr auf den Sperrkörper in Richtung geöffnet,wirkt.

Dieses erlangt man durch entsprechendes öffnen des Elektroventils P1 oder P2. Dann trennen sich beide Kolben 83 und 84 von ihren Sitzen,einer weniger,einer mehr,abhängig von den Dimensionen der Bohrungen in den Kolben 85,85a und den Bohrungen 50,wie auch von dem Verhältniss der Kolbenquerschnitte 83,84 und den Sitzen 86,86a und von der Stärke der Federn 89 und 89 a.

Nach Zeichnung Nr.7 besteht der Sperrkörper mit dem Mechanismus zum blokieren und automatischen Winkeleinstellen, aus einem Körper 15,der in den Führungen 11 des Sitzes 1 /Zeichn.Nr.1/geführt wird,an welche,über die Bolzen 28 und 29, zwei Joche 18 und 19,gebunden sind.

Die Joche lehnen mit ihrem oberen Teil an die Federn 22 und 23 an,und sind über die Gelenke 20 und 21 in beweglicher Verbindung mit dem Körper 15 verkoppelt.

Die Joche 18 und 19 tragen Scheiben 16 und 17,welche in den Jochen 18,19,über das Gelenk K befestigt sind.

Das Gelenk K lässt radiales versetzen der Scheibe und die feineinstellung des Winkels der Scheiben zu den Sitzen 12 und 13 /Zeichn.Nr.1/im Gehäuse des Schieberventils,zu.

Die Scheiben 16 und 17 können den Winkel,den sie einschliessen,
in erhobenem Masse verändern;dies geschieht jedoch nur über die
Scheibe,die sich unter der Kraftwirkung des Arbeitsmediums aus
dem Zuflussrohr,befindet.
Dies geschieht im Falle eines hydraulischen Schlages in der
Rohrleitung,während sich das Schieberventil in geschlossener
Position befindet, oder beim schliessen des Schieberventils.
Die Winkeländerung läuft völlig automatisch ab  und ist der
Stärke der Arbeitsmediumskraft proportional.
Während das Schieberventil geschlossen wird,bzw.der Sperrkörper
durch den Strom des Arbeitsfluids drängt,setzt sich diesem,
grosse Kraft kynetischer Energie,unter wessen Einfluß die
belastete Scheibe,die Federn 22 oder 23 zusammendrückt,und
seinen Winkel,den sie mit der Spindelachse einschliesst,entgegen.
Die andere Scheibe kann ihren nominalen Winkel nicht ändern,
den die Arbeitsmediumskraft wirkt auf sie in anderer Richtung,
welche in gewissem Winkel in Richtung des Durchdranges des Sperr
körpers  durch den Strom des Arbeitsfluids,gelenkt ist.
Diese Kraft ist im Sinne der Servo-Funktionalität.da sie den
Sperrkörper in geschlossene Position führt.

Der Sperrkörper-winkel verkleinert sich unter Einfluss der
Arbeitsmediumskraft wegen leichterem schliessen des Schieberventils und unter den hydraulischen Schlägen in der Rohrleitung,
wenn das Schieberventil geschlossen ist,so dass die Schieberspindel
von zu grosser Belastung,die schädlichen Einfluss auf die Antriebs
sicherheit des Schieberventils haben würde,geschohnt wird.

In der Voröffnungsphase des Schieberventils,muss der Winkel
zwischen den Scheiben blokiert werden, so dass das Mittelrohr des
Schieberventils entlastet werden kann,und zwar durch ablassen des
Fluids über den Schieberventilverteiler.

- 19 -

Deshalb ist,nach der Erfindung,ein Mechanismus zum blokieren des Sperrkörperwinkels vorgesehen,was einen grossen Unterschied,zu biss jetzt bekannten Lösungen des technischen Standes,darstellt. Alle diese Lösungen vertreten eine falsche technische Richtung, bzw.die Vergeringerung des Sperrkörperwinkels in der Voröffnungsphase des Schieberventils,während der Autor dieser Erfindung die Idee des vergrösserten Winkels des Sperrkörpers in der Oeffnungsphase des Schieberventils,vertritt.

Der Mechanismus zum blokieren des Sperrkörperwinkels besteht aus einer elyptischen Scheibe 24,in welcher sich zweiAnschläge 32 und 33 befinden.Sie erlauben radiales versetzen der Gewindebuchse 27,27a nur um 90°und der elyptischen Scheibe 24,welche danach die Gelenke 20 und 21 blokiert,über sie auch die Scheiben 16 und 17.

Die Gewindebuchse 27 ist in fester Verbindung mit der Spindel 4.

Nach Zeichnung Nr.7a ist der Sperrkörper mit selbem Mechanismus, wie auf Zeichnung Nr.7 dargestellt,nur mit dem Umterschied, dass die Gewindelbuchse 27a mit der Spindel 4 verkoppelt ist, und zwar auf entsprechende Konstruktionsart.

- 20 -

ANWEISUNG ZUR WIRTSCHAFTSANWENDUNG DER ERFINDUNG
----------------------------------------------------

Das Schieberventil mit integriertem Arbeitsmedium bringt
strukturelle Aenderungen in den Bau der Schieberventile
und setzt neue Aufgaben vor die Ingeneure und Techniker aus
diesem Gebiet.
Daher sollte man alle Vorteile dieser Erfindung,wieden
vergrösserten Sperrkörperwinkel,geringere Antriebsvorrichtungskraft,grösseren Arbeitsdruck und die Nennöffnung des Schieberventils,nutzen.
Dieses sind sehr enorme Unterschiede zu den biss jetzt
bekannten Schieberventilen,so sich die Notwendigkeit neuer
Berechnungen,welche den neuenstandenen Umständen angepasst werden
müssen,zeigt.
Die vergrösserung des DN und PN erfordert eine stärkere
Konstruktion des Schieberventils,wie auch besseres Material,
während die Anwendung der Arbeitsmediumsenergie für die
Funktionalität des Schiebrventils,schwächere Antriebsvorrichtungen
und Spindeln kleinerer Dimensionen zulässt.
Die vergrösserung des Sperrkörperwinkels sollte den Dimensionen
von PN und DN angepasst sein.

Mit dem Arbeitsmediumssystem werden zwei neue Komponenten
in das Schiebrventil integriert:der Schieberventilverteiler und
der Sperrkörper mit Mechanismus zum blokieren und automatischem
Winkeleinstellen.

Der Schieberventilverteiler besteht aus mehreren Elementen,
dessen Korrekte Funktion von ihren Dimensionen abhängt.
Zuerst muss das DN des Verteilers nach der Grösse des DN des
Schieberventils bestimmt werden,dessen Verhältnis orientierungsweise nach folgender Formel genommen wird. $DN_{Verteiler} = \frac{PN}{20}$

mit gewissen Abweichungen.

Danach wird der Typ des Verteilers und das Material zur Ausarbeitung,welches vom Arbeitsmedium abhängt,bestimmt.
Darauf folgen der Querschnitt der Lenkbohrungen,Rückschlagventile und Drosseln,die Federstärke und der Typ des Hilfsventils P
mit entsprechendster Stärke.
Falls der Verteiler ein Kolbenverteiler ist,müssen Kolben
mit kleinem Spiel und eventuell mit einem Drehring gefertigt
werden.
Das Spiel und der Drehring müssen nicht in Dichtungskopplung
in ihren zylindrischen Räumen,sein.
Die Kolben werden sehr häufig aus PTFE Material und dessen
Mischungen gefertigt werden.

Mit der Erfindung des Schieberventilverteilers,hat man auf
die Schieberventilcharakteristiken grossen Einfluss gehabt.
Die Erfindung gilt für alle Schieberventildimensionen.

Die andere Komponente des Arneitsmediumssystems,der Sperrkörper mie dem Mechanismus zum blokieren und automatischem
Winkeleinstellen,wird bei grösseren Schieberventilen ,angefangen
mit DN 200,von der PN und der Grösse des Hantierungsmoments,
der für das Schliessen des Schieberventils notwendig ist,
abhängig.
Die Sperrkörperscheiben sind mit Gelenken an die Jochs
gebunden,so dass sie sich radial versetzen können in ihnen.
Die Jochs können ihre Stellung zur Spindelachse ändern,da sie
mit einem Ende mit der beweglichen Achse verbunden sind,
mit dem anderen Ende lehnen sie sich über die Feder auf
den Sperrträger.
Eine solche Kopplung ermöglicht die Winkeleinstellung des
Sperrkörpers zu den Bewegungen des Arbeitsmediums in der
Rohrleitung,vorallem beim schliessen des Schiebrventils.

- 22 -

Wenn das Schieberventil geöffnet werden soll,muss der Sperrkörperwinkel vorher blokiert werden und zwar über die
elyptische Scheibe,die nicht präzis ausgearbeitet werden muss.
Das Gelenk der Scheibe kann mit einem Bindeelement an die
Scheibe befestigt werden,kann aber auch als ein Stück
gegossen werden,was von der Arbeitsmediumstemperatur abhängt.
Die anderen Teile des Sperrkörpers können gegossen oder aus
gepressten Teilen geschweisst werden.
Die Gewindebuchse muss sich um 90° drehen,so dass sie sich
an Gleitunterlegscheiben lehnen müssen.

Janković Mladen

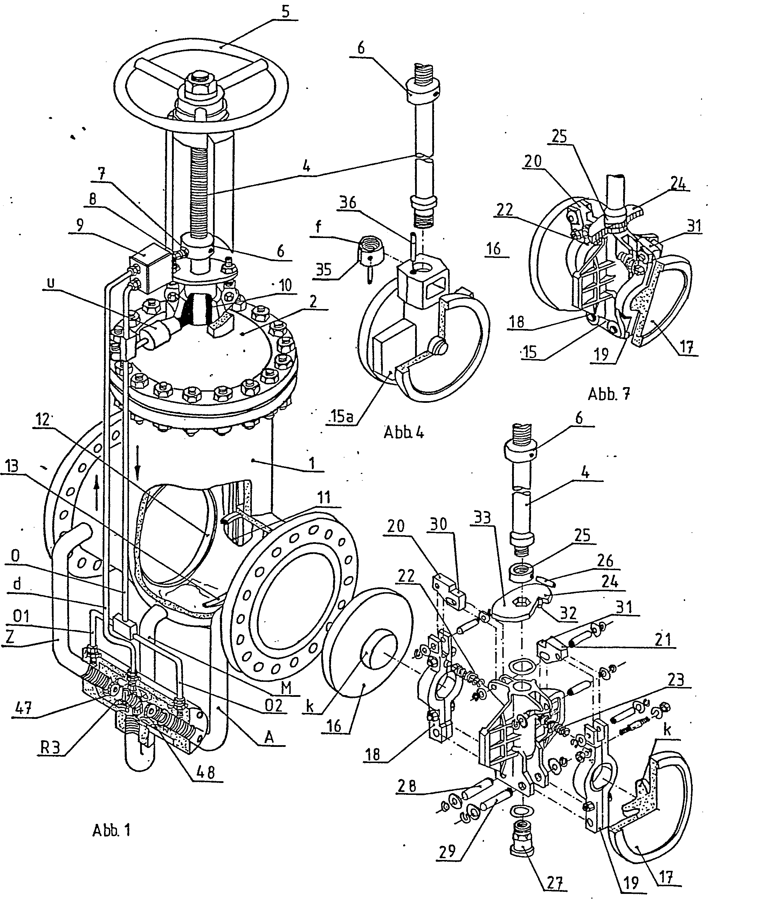

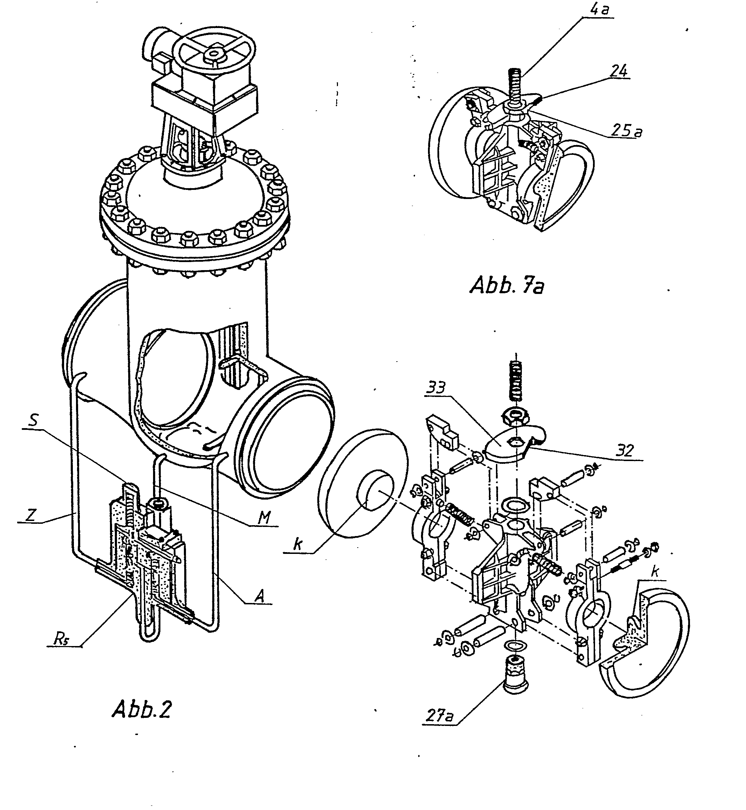

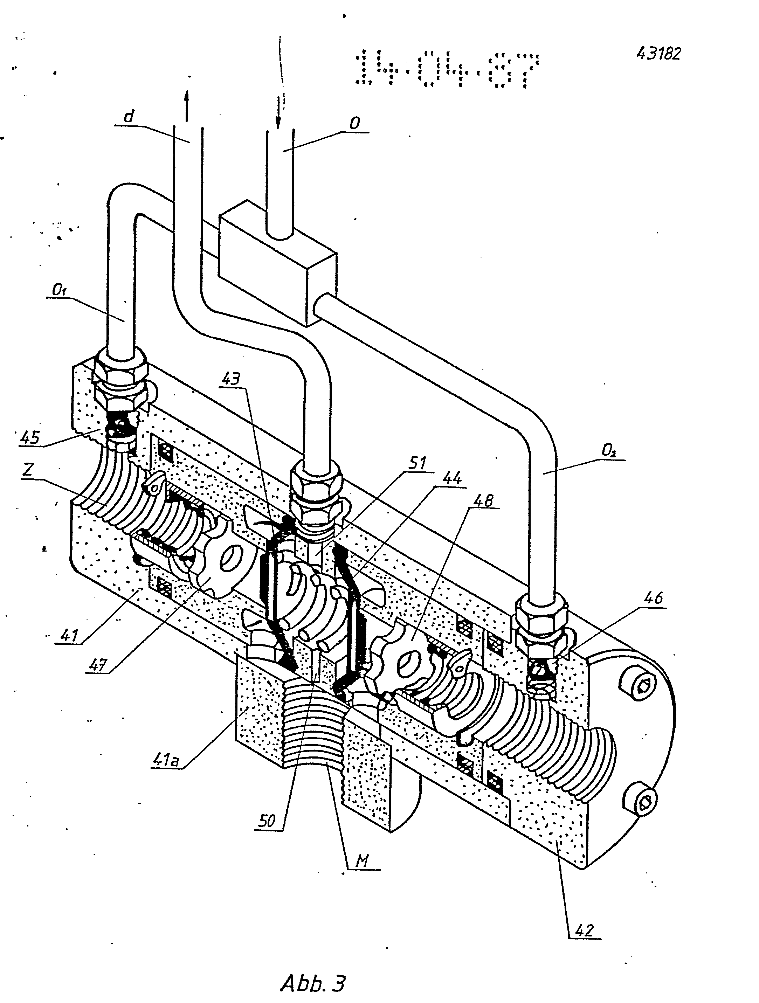

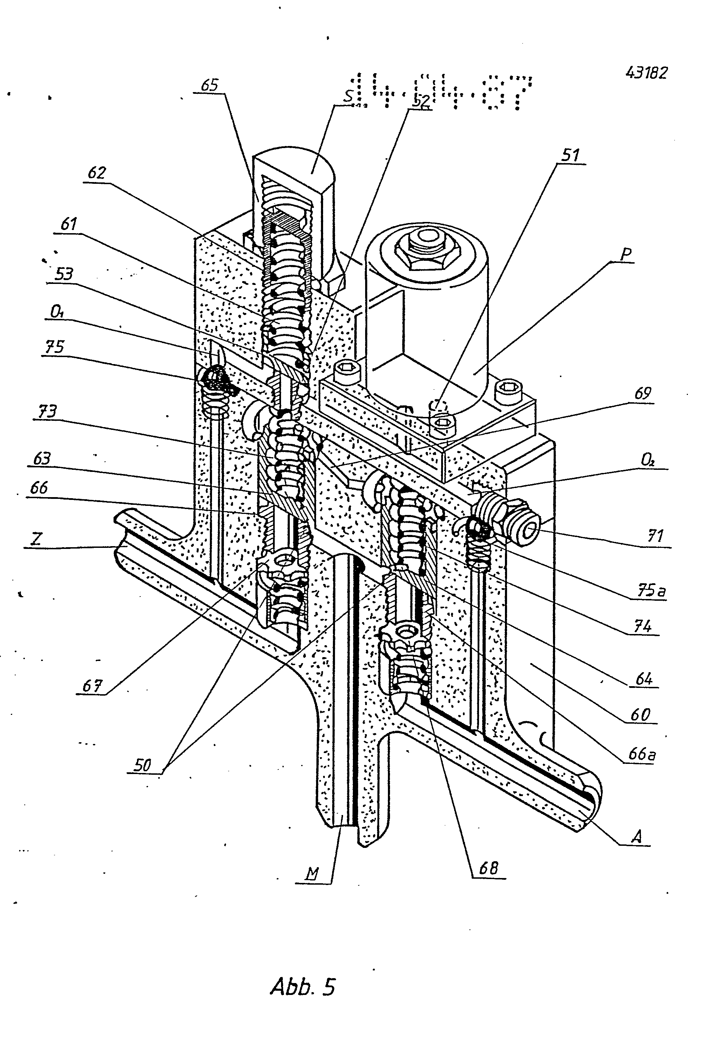

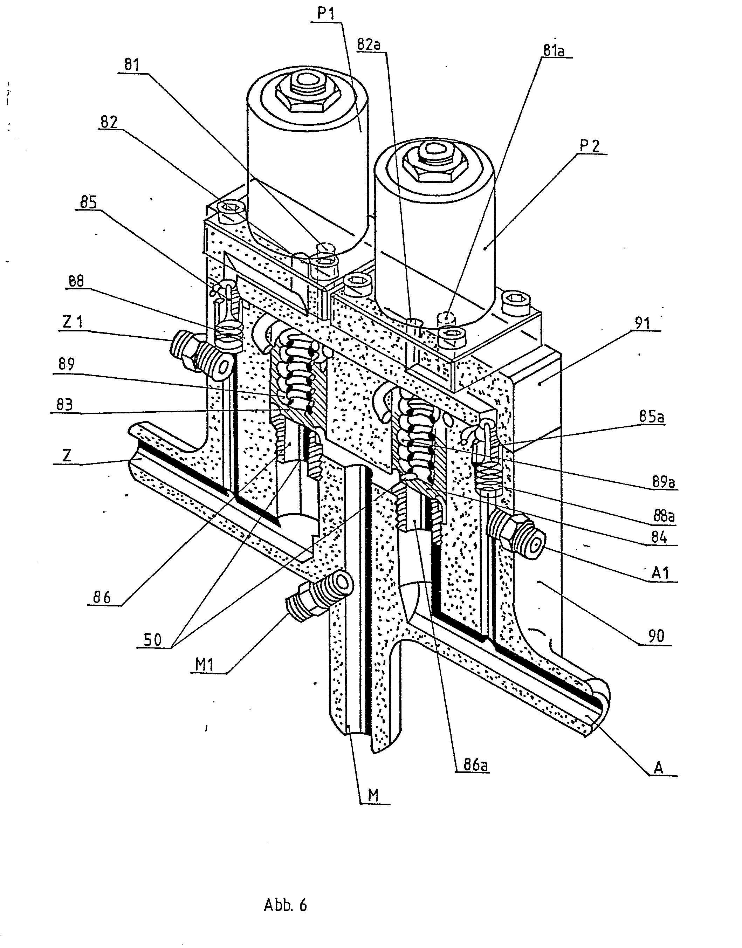

PATENTANSPRÜCHE

1. Das Schieberventil mit integrierten Arbeitsmedium,ist dadurch gekennzeichnet, dass die Scheiben /16,17/ des Sperrkörpers mit einem spherischen Gelenk /k/ mit den Jochs /18,19/,die mit den unteren Enden radial mit dem Körper /15/ mit Hilfe von Bolzen /28,29/ verbunden sind,und mit den oberen Enden mit den Gelenken /20,21/ radial verbunden sind,die mit dem Körper /15/ verbunden sind, wobei die Jochs /18,19/ durch die Federn /22,23/ zusammengedrückt sind,die mit ihren Enden an den Körper /15/ lehnen, während an der Gewindebuchse /27,27a/ die den Körper /15/ mit der Spindel /4,4a/ verbindet,eine elyptische Scheibe /24/ mit zwei Anschlägen /32,33/, die auf die Gelenkfläche /20,21/ lehnen, befestigt sind.

2. Das Schieberventil,nach dem Anspruch 1,ist dadurch gekennzeichnet,dass das Teil /Z/ des Körpers /41/ des Verteilers /R$_3$/, welches mit dem Gehäuse /1/ über das Rückschlagventil /45/ des Kanals /01/ verbunden ist, und mit den gemeinsamen Kanal /0/mit der ersten Kammer des Pilotventils /9/,wie auch das Teil /A/ des Körpers /41/ des Verteilers /R3/,der mit den Gehäuse /1/,über das Rückschlagventil /46/ mit den Kanal /02/ und dem gemeinsamen Kanal /0/ mit der ersten Kammer des Pilotventils /9/ verbunden ist, wobei die andere Kammer des Pilotventil/9/ mit der Hilfsrohrleitund /d/ mit dem Körper /41/des Verteilers /R3/ verbunden ist,der mit dem Mittelrohr /M/ mit dem Gehäuse/1/ verbunden ist,während der Hebel /7/ zum aktivieren des Pilotventils/9/ mit einer Seite mit der Feder /8/ zusammengedrückt ist,mit der anderen Seite lehnt er an das Excenter/6/ das an die Spindel/4/,mit 1/4 der Radialfreiheit,montiert ist.

3. Das Schieberventil,nach Anspruch 1, ist dadurch gekennzeichnet das der Körper/60/ des Verteilers/R5/ mit den Rohren/Z,M,A/ mit den zufluss,mittel und abflusteilen des Schieberventils/1/ verbunden ist,der Körper /60/ ist mit einem Deckel/70/,in welchem sich eine Oeffnung/51/ mit einem Hilfselektroventil/P/,geschlossen und eine Oeffnung /52/ mit einem Ueberlaufventil/S/ geschlossen während sich im Körper /60/im Zufluss/Z/,bzw. Abflussrohr/A/ Drosseln /67/ bzw. /68/ befinden, die mit Federn auf die Ventilsitze/66,66a/ gedrückt sind,auf welche die Kolben/63,64/ aufliegen,durch die Federn/73,74/zusammengedrückt,wobei der Raum überhalb der Kolben/63,64/ mit kleinen Oefnnungen /50/ verbunden ist,und in den Stirnen der Kolben/63,64/sind kleine /50/öeffnungen eingearbeitet,die biss zum Mittelrohr/M/ des Körpers /60/ des Verteilers /R5/ führen,während das Zufluss/Z/ und Abflussrohr/A/ des Verteilers/R5/ miteinander mit Kanälen /01,02/ über zwei Rückschlagventile /75,75a/ verbunden ist.

4. Das Schieberventil,nach Anspruch 3,      dadurch gekennzeichnet dass das Ueberlaufventil/S/aus Sitz /52/ des Ventils besteht wecher sich im Kanal/01/ befindet,auf welchen sich der Kolben /53/ lehnt, der durch die Feder /61/ zusammengdrückt ist, dessen anderes Ende auf den Grund der Gewindebuchse /62/lehnt,dessen Ende über dem Deckel/70/des Verteilers/R5/ ragt, und mit einer Gewindekappe /65/gesichert ist.

5. Das Schieberventil nach Anspruch 1,      dadurch gekennzeichnet,das die Teile des Körpers/90/ des Verteilers/R6/ mit elektronischem Lenksystem mit den Rohren/Z,M,A/,mit dem Zufluss,Mittel und Abflussrohr des Gehäuses/1/ verbunden sind, wobei im Körper /90/Sitze/86,86a/eingebaut sind,auf welche Kolben/83,84/auflehnen,die Bohrungen/50/haben, und welche durch Federn/89,89a/ zusammengedrückt sind,die an den Deckel /91/ des Verteilers/R6/ lehnen,in welchem sich Kanäle/82,82a/ befinden,die mit Hilfselektroventilen/P1,P2/ geschlossen sind, während sich in den Kanälen,die den Zufluss/Z/ mit dem Elektro- ventil/P1/,bzw. den Abfluss mit dem Elektroventil/P2/verbinden, Kolben/85,85a  angebracht befinden,und zwar mit axial
ausgearbeiteten Bohrungen,an entsprechende Sitze mit Federn/
88,88a/gedrückt,und jedes Teil/Z,M,A/ hat je einen Anschluss
für das Kontaktmanometer/Z1,M1,A1,/.

6. Das Schieberventil,nach beliebiger obengenannten Ansprüche
ist dadurch gekennzeichnet,dass die Fluidseite des Zylinders/u/
zum schmieren mit einem gemeinsamen Kanal/O/ verbunden ist,
die Seite mit Schmieröl gefüllt ist mit dem Raum der Dichtung/10/
verbunden, wobei zwischen der Fluid und der Schmierölseite des
Zylinders/u/ axial ein Hilfskolben angebracht ist, dessen
grössere Stirn der Fluidseite,die kleinere Stirn der Schmierölseite zugedreht ist.

7. Das Schieberventil mit integriertem Arbeitsmedium,mit
konventionalem Sperrkörper,ist dadurch gekennzeichnet,dass
sich im Sperrkörper/15a/ eine Mutter/35/ befindet,so dass sie
gedreht werden kann,auf dessen Aussenmantel eine Nut/f/
eingearbeitet ist in Form 1/4 des Mantels,dessen eine
Vertikalkante auf den Stift/36/ lehnt,der im Körper/15a/
zu der Spindel paralell angebracht ist,und auf dessen oberem
Teil das Excenter/6/ ist,wobei die Spindel in die Mutter
/35/ gedreht und mit dem Stift gesichert ist.

Janković Mladen
Vollmächtiger

14·04·87 43182

Abb. 1

Abb. 4

Abb. 7

0244390

14·04·87

43182

Abb. 7a

Abb.2

14·04·87

43182

Abb. 3

0244390

43182

Abb. 5

Abb. 6